Europäisches Patentamt

European Patent Office

Office européen des brevets

(11) Veröffentlichungsnummer: **0 029 157**
**B1**

(12)

# EUROPÄISCHE PATENTSCHRIFT

(45) Veröffentlichungstag der Patentschrift:
09.02.83

(21) Anmeldenummer: 80106756.2

(22) Anmeldetag: 03.11.80

(51) Int. Cl.³: **C 01 B 33/02**, C 03 C 3/06,
H 01 L 31/18

(54) Verfahren zum Herstellen von für Halbleiterbauelemente verwendbarem Silizium aus Quarzsand und dessen Verwendung für Solarzellen.

(30) Priorität: 08.11.79 DE 2945141

(43) Veröffentlichungstag der Anmeldung:
27.05.81 Patentblatt 81/21

(45) Bekanntmachung des Hinweises auf die Patenterteilung:
09.02.83 Patentblatt 83/6

(84) Benannte Vertragsstaaten:
FR GB IT

(56) Entgegenhaltungen:
DE-A-2 623 413
US-A-2 215 039
US-A-3 650 721
JOURNAL OF METALS, Band 30, Nr. 6. Juin 1978,
New York, US, V. D. DOSAJ et al.: »High-purity
silicon for solar cell applications«, Seiten 8—13
JOURNAL DU FOUR ELECTRIQUE, Nr. 9, November 1971, Paris, FR, »L'élaboration du silicium
métal au four électrique«, Seiten 225—228

(73) Patentinhaber: SIEMENS AKTIENGESELLSCHAFT,
Berlin und München Wittelsbacherplatz 2,
D-8000 München 2 (DE)

(72) Erfinder: Aulich, Hubert, Dr., Schwarzstrasse 3,
D-8000 München 80 (DE)
Erfinder: Grabmaier, Josef, Dr., Am Seefeld 17,
D-8131 Berg (DE)

# Verfahren zum Herstellen von für Halbleiterbauelemente verwendbarem Silizium aus Quarzsand und dessen Verwendung für Solarzellen

Die vorliegende Patentanmeldung betrifft ein Verfahren zum Herstellen von für Halbleiterbauelemente, insbesondere für Solarzellen, verwendbarem Silizium, wobei als Ausgangsmaterial Quarzsand verwendet wird und das Silizium durch Reduktion von Siliziumdioxid ($SiO_2$) im Lichtbogen gewonnen wird.

Der technische Anwendungsbereich des in der Halbleitertechnik bekannten Silizium ist begrenzt durch den Reinheitsgrad seines Ausgangsmaterials. Bekanntlich wird das sogenannte technische Silizium (98%) aus Quarzsand und Kohlenstoff im Lichtbogen hergestellt und enthält als Hauptverunreinigung Eisen, Bor und Phosphor. Insbeondere die Elemente Bor und Phosphor wirken sich sehr störend aus, wenn aus dem gewonnenen Silizium Halbleiterbauelemente hergestellt werden sollen, da diese Elemente den Leitfähigkeitscharakter des Halbleitermaterials entscheidend beeinflussen.

Für die Herstellung von hochreinem Silizium für Halbleiterzwecke durch Reduktion von $SiO_2$ im Lichtbogen wird deshalb als Ausgangssubstanz Quarzsand mit einem geringen Verunreinigungspegel benötigt. Dieser Quarzsand mit der erforderlichen Reinheit ist weltweit jedoch nur in begrenztem Maße vorhanden und deshalb sehr teuer. Verwendet man als Ausgangsmaterial bergmännisch abgebauten Quarzsand, so ist durch das Lichtbogenverfahren der geforderte Reinheitsgrad nicht zu erzielen.

Aus der DE-OS 2 623 413 (=US-PS 4 097 584) ist ein Verfahren zur Herstellung von hochreinem Silizium für Halbleiterzwecke zu entnehmen, bei dem nach der Reduktion des $SiO_2$ mit Kohlenstoff im Lichtbogen das mit den Verunreinigungen noch behaftete Silizium (98%) im geschmolzenen Zustand in Anwesenheit von Wasser mit Wasserstoff oder einer wasserstoff-enthaltenden Verbindung behandelt wird, wobei der Phosphor überwiegend in Form von gebildetem Phosphorwasserstoff entweicht, während Bor als Boroxid in der auf dem geschmolzenen Silizium befindlichen Schlacke zurückbleibt und so leicht abgetrennt werden kann. Dieses Verfahren wird vorzugsweise in einem Konverter bei Unterdruck durchgeführt. Das erhaltene Silizium weist einen Verunreinigungspegel von kleiner 1 ppm an Bor und Phosphor auf.

Die Erfindung beschreibt einen anderen Weg zur Lösung der Aufgabe, hochreines Silizium aus Quarzsand zu gewinnen, welches für die Herstellung von Halbleiterbauelementen direkt verwendet werden kann. Das Verfahren ist erfindungsgemäß dadurch gekennzeichnet, daß

a) der Quarzsand mittels geeigneter Zuschläge durch Schmelzen in die Glasphase übergeführt wird,

b) die Glasphase in eine Faser-, Band oder Folienstruktur in einer Dicke kleiner 100 μm (±5%) übergeführt wird,

c) durch Tempern des in Faser-, Band- oder Folienstruktur vorliegenden Glases eine Phasentrennung in eine $SiO_2$-reiche Phase und in eine, die Verunreinigungen enthaltenden, aus den entsprechenden Zuschlägen gebildete (weiche) Phase durchgeführt wird,

d) die die Verunreinigungen enthaltende Phase durch eine Säure- und/oder Laugenbehandlung aus dem Glaskörper herausgelöst wird und

e) der poröse $SiO_2$-Glaskörper im Lichtbogen in bekannter Weise mit Kohlenstoff oder Kohlenstoff enthaltenden Verbindungen zu Silizium reduziert wird.

Durch dieses Phasentrennungs-Auslaug-Verfahren, welches in ähnlicher Weise in der Glasindustrie (sieh US-PS 2 215 039) bei der Herstellung von Rohren aus Vycor-Glas durchgeführt wird, erhält man transparente Glasrohre mit einer Zusammensetzung von 96% $SiO_2$ und 4% Bor. Wichtig bei dem Verfahren nach der Lehre der Erfindung ist die Herstellung eines Glaskörpers sehr großer Oberfläche und geringem, aber einheitlichem Durchmesser oder Dicke, welche im Bereich von 20 bis 100 μm (±5%) sein sollte.

Gemäß einem Ausführungsbeispiel nach der Lehre der Erfindung werden als Zuschläge Boroxid und Alkalicarbonate und/oder -oxide, vorzugsweise Soda, in einer Schmelzwanne bei einer Temperatur von 1200 bis 1400°C mit dem Quarzsand zu Natrium-Borosilikatglas erschmolzen und nach einer Homogenisierungs- und Läuterungsphase aus am Boden der Schmelzwanne befindlichen Düsen Fasern, Folien oder Bänder mit einer Geschwindigkeit von beispielsweise 700 m/sec abgezogen und vorzugsweise auf große Ziehtrommeln aufgespult. Während des Faserziehvorganges wird die Glasschmelze laufend ergänzt, damit der Pegel in der Schmelzwanne konstant bleibt. Die Technik des Erschmelzens großer Glaschargen und die Durchführung des Faserziehprozesses bei hohen Abzugsgeschwindigkeiten sind bekannter Stand der Technik.

Nach dem Ziehprozeß werden die Fasern oder Folien oder Bänder gegebenenfalls nach ihrer Zerteilung bei einer Temperatur von 500 bis 700°C mindestens 5 Stunden getempert. Beim Tempern kommt es zu einer Phasentrennung im Glas, wobei sich die Verunreinigungen (Eisen, Kupfer, Chrom und andere Übergangsmetalle) in der alkalireichen (weichen) Phase ansammeln. (Siehe auch US-PS 3 650 721).

Die Glaszusammensetzung muß so gewählt werden, daß die beiden flüssigen Phasen unterschiedlicher Zusammensetzung nicht als »isolierte Inseln« in der Glasmatrix vorliegen, sondern wir ein Kanalsystem miteinander verbunden sind. Dies wird beispielsweise erreicht, wenn in einem Schmelztiegel aus Quarzglas oder Platin aus Quarzsand, Boroxid und Natriumkarbonat (Soda) bei einer Temperatur von 1200 bis 1400°C ein Natrium-Borsilikatglas mit folgender Zusammensetzung erschmolzen wird: 55 bis 70 Gewichtsprozent $SiO_2$, 15 bis 35 Gewichtsprozent $B_2O_3$, 5 bis 10 Gewichtsprozent $Na_2O$.

Nach Beendigung der Phasentrennung werden die Fasern, Folien oder Bänder in z. B. 3n-Salpetersäure getaucht, um die $Na_2O-B_2O_3$-reiche Phase, die die Verunreinigungen enthält, auszulaugen. Dieser Prozeß, der im Bereich von 90 bis 100°C (vorzugsweise 97°C) durchgeführt wird, dauert je nach Durchmesser der Fasern, Folien oder Bändern 24 bis 72 Stunden. An den Auslaugprozeß mit Säuren kann sich gegebenenfalls auch ein Waschprozeß mit verdünnten Laugen anschließen.

Beim modifizierten Phasen-Trennungs-Verfahren nach der Lehre der Erfindung wird durch die große Oberfläche und die geringe Dicke der Glaskörper die säurelösliche Phase quantitativ herausgelöst, so daß nach Beendigung des Auslaugprozesses ein poröser Glaskörper aus reinem $SiO_2$ zurückbleibt, bei dem der Borgehalt auf kleiner 100 ppm verringert ist. Die Konzentration an Eisen, Kupfer, Chrom wurde spektralanalytisch zu kleiner 1 ppm ermittelt.

Um die Phasentrennung bzw. den Auslaugvorgang zu beschleunigen, können dem $Na_2O-B_2O_3$-$SiO_2$-Glas auch geringe Mengen Phosphorpentoxid ($P_2O_5$) beim Schmelzprozeß zugesetzt werden. Anstelle des $Na_2O$ können auch andere Alkalimetalloxide, wie z. B. Kaliumoxid ($K_2O$), Lithiumoxid ($Li_2O$) oder Mischungen mit $Na_2O$ verwendet werden.

Nach dem Auslaugprozeß werden die Glaskörper aus hochreinem $SiO_2$ mit destilliertem Wasser gewaschen, bei 150°C getrocknet und anschließend im Lichtbogen mit elementarem Kohlenstoff oder kohlenstoffhaltigen Verbindungen wie Sukrose oder Stärke reduziert. Alternativ kann bereits während der Glasherstellung der Schmelze Graphit beigegeben werden. Man erhält so nach dem Auslaugprozeß einen hochreinen $SiO_2$-Glaskörper, in dessen Matrix homogen verteilt die zur Reduktion erforderlichen Kohlenstoffteilchen bereits eingelagert sind. Durch den innigen Kontakt der Kohlenstoffteilchen im $SiO_2$-Gerüst erfolgt eine quantitative Reduktion im Lichtbogen.

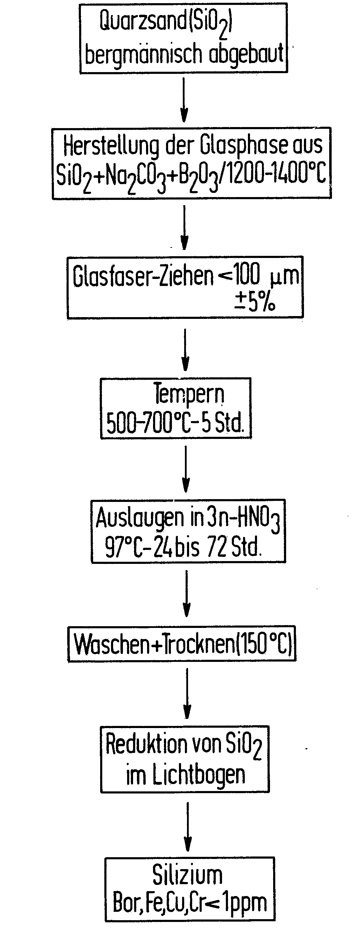

Die wesentlichen Verfahrensschritte des erfindungsgemäßen Verfahrens sind dem in der Zeichnung befindlichen Flußdiagramm zu entnehmen.

**Patentansprüche**

1. Verfahren zum Herstellen von für Halbleiterbauelemente, insbesondere für Solarzellen, verwendbarem Silizium, wobei als Ausgangsmaterial Quarzsand verwendet wird und das Silizium durch Reduktion von Siliziumdioxid im Lichtbogen gewonnen wird, dadurch gekennzeichnet, daß

a) der Quarzsand mittels geeigneter Zuschläge durch Schmelzen in die Glasphase übergeführt wird,

b) die Glasphase in eine Faser-, Band- oder Folienstruktur in einer Dicke kleiner 100 µm (±5%) übergeführt wird,

c) durch Tempern des in Faser-, Band- oder Folienstruktur vorliegenden Glases eine Phasentrennung in eine $SiO_2$-reiche Phase und in eine, die Verunreinigungen enthaltende, aus den entsprechenden Zuschlägen gebildete (weiche) Phase durchgeführt wird,

d) die die Verunreinigungen enthaltende Phase durch eine Säure- und/oder Laugenbehandlung aus dem Glaskörper herausgelöst wird und

e) der poröse $SiO_2$-Glaskörper im Lichtbogen bekannter Weise mit Kohlenstoff oder Kohlenstoff enthaltenden Verbindungen zu Silizium reduziert wird.

2. Verfahren nach Anspruch 1, dadurch gekennzeichnet, daß die Glasfasern, das Glasband oder die Glasfolie mit einer Geschwindigkeit von 60 bis 3000 m/min aus der Schmelze abgezogen werden.

3. Verfahren nach Anspruch 1, dadurch gekennzeichnet, daß die Glasfasern nach dem Düsenblasverfahren mit einer Geschwindigkeit von 6000 m/min hergestellt werden.

4. Verfahren nach Anspruch 1 bis 3, dadurch gekennzeichnet, daß als Zuschläge Boroxid und Alkalimetallkarbonate oder -oxide verwendet werden.

5 Verfahren nach Anspruch 4, dadurch gekennzeichnet, daß als Alkalikarbonat Soda ($Na_2CO_3$) verwendet wird.

6. Verfahren nach Anspruch 1 bis 5, dadurch gekennzeichnet, daß der Anteil der Zuschläge so eingestellt wird, daß ein Glas entsteht, bei dem der $SiO_2$-Gehalt 55 bis 70 Gewichtsprozent beträgt.

7. Verfahren nach Anspruch 1 bis 6, dadurch gekennzeichnet, daß die Glasschmelze bei 1200 bis 1400°C hergestellt wird.

8. Verfahren nach Anspruch 1 bis 7, dadurch gekennzeichnet, daß bei der Glasherstellung zusätzlich Phosphorpentoxid zugesetzt wird.

9. Verfahren nach Anspruch 1 bis 8, dadurch gekennzeichnet, daß bei der Glasherstellung der Schmelze Graphit oder andere kohlenstoffhaltige Verbindungen zugesetzt werden.

10. Verfahren nach Anspruch 1 bis 9, dadurch gekennzeichnet, daß der Temperaturprozeß bei 500 bis 700°C in mindestens fünf Stunden durchgeführt wird.

11. Verfahren nach Anspruch 1 bis 10, dadurch gekennzeichnet, daß die Säurebehandlung mit 3n-Salpetersäure bei 90 bis 100°C, vorzugsweise bei 97°C, mindestens 20 Stunden lang erfolgt.

12. Verfahren nach Anspruch 11, dadurch gekennzeichnet, daß die mit Säure behandelten Glaskörper einem weiteren Auslaugprozeß mit verdünnter Lauge unterworfen werden.

13. Verfahren nach Anspruch 11 und/oder 12, dadurch gekennzeichnet, daß die mit Säure und/oder Lauge behandelten Glaskörper mit destilliertem Wasser gewaschen und bei 150°C getrocknet werden.

14. Verfahren nach Anspruch 1 bis 13, dadurch gekennzeichnet, daß bei der Reduktion im Lichtbogen als kohlenstoffhaltige Verbindungen Sukrose und/oder Stärke zugesetzt werden.

15. Verwendung des nach Anspruch 1 bis 14 hergestellten Siliziums als Grundmaterial für Solarzellen.

## Claims

1. A process for the production of silicon for use for semiconductor components, in particular for solar cells, in which quartz sand is used as starting material and the silicon is obtained by reducing silicon dioxide in the arc, characterised in that
a) the quartz sand is converted into the vitreous phase by melting, with the aid of suitable additives;
b) the vitreous phase is converted into a fibre-, band- or foil-structure having a thickness which is less than 100 μm (±5%);
c) by annealing the glass present in the fibre-, band- or foil-structure, a phase separation is effected into a phase which is rich in SiO$_2$, and a (soft) phase, which contains impurities and is formed from the suitable additives;
d) the impurity-containing phase is dissolved out of the glass body by an acid and/or alkali treatment; and
e) the porous SiO$_2$-glass body is reduced in the arc to silicon in known manner with carbon or compounds containing carbon.

2. A process as claimed in Claim 1, characterised in that the glass fibres, the glass band or the glass foil are withdrawn from the melt at a speed of 60 to 3000 m/min.

3. A process as claimed in Claim 1, characterised in that the glass fibres are produced in accordance with the nozzle blast method at a speed of 6000 m/min.

4. A process as claimed in Claim 1 to 3, characterised in that boron oxide and alkali metal carbonates or oxides are used as additives.

5. A process as claimed in Claim 4, characterised in that soda (Na$_2$CO$_3$) is used as alkali metal carbonate.

6. A process as claimed in Claim 1 to 5, characterised in that the amount of the additions is so adjusted, that a glass is produced in which the SiO$_2$-content is 55 to 70 percent by weight.

7. A process as claimed in Claim 1 to 6, characterised in that the glass melt is produced at 1200 to 1400°C.

8. A process as claimed in Claim 1 to 7, characterised in that phosphorus pentoxide is additionally added in the production of the glass.

9. A process as claimed in Claim 1 to 8, characterised in that in the glass production, graphite or other compounds containing carbon are added to the melt.

10. A process as claimed in Claim 1 to 9, characterised in that the annealing process is carried out at 500 to 700°C for at least five hours.

11. A process as claimed in Claim 1 to 10, characterised in that the acid treatment is effected with 3N-nitric acid at 90 to 100°C, preferably at 97°C, for at least 20 hours.

12. A process as claimed in Claim 11, characterised in that the glass bodies treated with acid are subjected to a further extraction process with dilute alkali solution.

13. A process as claimed in Claim 11 und/or 12, characterised in that the glass bodies treated with acid and/or alkaline solution, are washed with distilled water und dried at 150°C.

14. A process as claimed in Claim 1 to 13, characterised in that in the reduction in the arc, sucrose and/or starch are added as compounds containing carbon.

15. The use of the silicon which is produced in accordance with Claim 1 to 14, as a starting material for solar cells.

## Revendications

1. Procédé de fabrication de silicium utilisable pour des composants à semiconducteurs, plus particulièrement pour des cellules solaires, du type utilisant du sable silicieux comme matériau de départ et le silicium étant obtenu par réduction de la silice dans un arc électrique, caractérisé par le fait que
a) le sable silicieux est amené à l'aide de fondants appropriés par fusion dans la phase vitreuse,
b) la phase vitreuse est amenée à une structure de fibres, de rubans ou de feuilles d'une épaisseur inférieure à 100 μm (±5%),
c) par traitement thermique du verre se présentant sous la forme d'une structure de fils, de rubans ou de feuilles, on réalise une séparation de phases en une phase riche en SiO$_2$ et en une phase (molle) qui contient des impuretés et qui est formée à partir des additions correspondantes,
d) la phase qui contient les impuretés est enlevée du corps de verre par dissolution à l'aide d'un traitement acide et/ou à la lessive, et
e) le corps de verre au SiO$_2$ poreux est réduit en silice dans un arc électrique, de façon connue, avec du carbone ou des composés contenant du carbone.

2. Procédé selon la revendication 1, caractérisé par le fait que les fibres de verre, le ruban de verre ou la feuille de verre sont étirés à partir du bain de fusion à une vitesse de 60 à 3000 m/mn.

3. Procédé selon la revendication 1, caractérisé par le fait que les fibres de verre sont fabriquées selon le procédé de soufflage à la tuyère, avec une vitesse de 6000 m/mn.

4. Procédé selon la revendication 1 à 3, caractérisé par le fait que l'on utilise comme fondants de l'oxyde de bore et des carbonates ou des oxydes de métaux alcalins.

5. Procédé selon la revendication 4, caractérisé par le fait que l'on utilise comme carbonate de métal alcalin du carbonate de sodium ($Na_2CO_3$).

6. Procédé selon la revendication 1 à 5, caractérisé par le fait que la partie des fondants est réglée de telle façon qu'il se forme un verre dans lequel la teneur en $SiO_2$ est de 55 à 70% en poids.

7. Procédé selon la revendication 1 à 6, caractérisé par le fait que le bain de verre en fusion est préparé à 1200 à 1400° C.

8. Procédé selon la revendication 1 à 7, caractérisé par le fait que lors de la préparation du verre on ajoute en plus de l'anhydride phosphorique.

9. Procédé selon la revendication 1 à 8, caractérisé par le fait que lors de la préparation du verre on ajoute au bain en fusion du graphite ou d'uatres composés contenant du carbone.

10. Procédé selon la revendication 1 à 9, caractérisé par le fait que le processus de traitement thermique est réalisé pendant au moins 5 heures à 500 à 700° C.

11. Procédé selon la revendication 1 à 10, caractérisé par le fait que le traitement à l'acide a lieu avec de l'acide nitrique 3n à 90 à 100° C, de préférence à 97° C pendant au moins 20 heures.

12. Procédé selon la revendication 11, caractérisé par le fait que le corps en verre traité avec de l'acide est soumis à d'autres opérations de lessivage avec une lessive diluée.

13. Procédé selon la revendication 11 et/ou 12, caractérisé par le fait que les corps en verre traités avec un acide et/ou avec une lessive sont lavés avec de l'eau distillée et séchés à 150° C.

14. Procédé selon la revendication 1 à 13, caractérisé par le fait que lors de la réduction dans l'arc électrique, on ajoute, comme cimposé contenant du carbone, le saccharose et/ou l'amidon.

15. Mise en oeuvre du silicium préparé selon la revendication 1 à 14 comme matériau de base pour des cellules solaires.

**1/1**

```
┌─────────────────────────┐
│ Quarzsand(SiO₂)         │
│ bergmännisch abgebaut   │
└─────────────────────────┘
            │
            ▼
┌─────────────────────────────┐
│ Herstellung der Glasphase aus│
│ SiO₂+Na₂CO₃+B₂O₃/1200-1400°C │
└─────────────────────────────┘
            │
            ▼
┌─────────────────────────┐
│ Glasfaser-Ziehen <100 μm│
│                    ±5%  │
└─────────────────────────┘
            │
            ▼
┌─────────────────────────┐
│ Tempern                 │
│ 500-700°C-5 Std.        │
└─────────────────────────┘
            │
            ▼
┌─────────────────────────┐
│ Auslaugen in 3n-HNO₃    │
│ 97°C-24 bis 72 Std.     │
└─────────────────────────┘
            │
            ▼
┌─────────────────────────┐
│ Waschen+Trocknen(150°C) │
└─────────────────────────┘
            │
            ▼
┌─────────────────────────┐
│ Reduktion von SiO₂      │
│ im Lichtbogen           │
└─────────────────────────┘
            │
            ▼
┌─────────────────────────┐
│ Silizium                │
│ Bor,Fe,Cu,Cr<1ppm       │
└─────────────────────────┘
```